Europäisches Patentamt

**(19)** European Patent Office

Office européen des brevets

**(11)** **EP 0 500 110 B1**

**(12)** **EUROPEAN PATENT SPECIFICATION**

**(45)** Date of publication and mention
of the grant of the patent:
**22.05.1996 Bulletin 1996/21**

**(51)** Int. Cl.$^6$: **B23K 26/00**, B41J 2/16,
B29C 71/04

**(21)** Application number: **92102868.4**

**(22)** Date of filing: **20.02.1992**

**(54)** **Process of photo-ablating at least one stepped opening extending through a polymer material, and a nozzle plate having stepped openings**

Photoabtrageverfahren von wenigstens einer gestuften Öffnung, die ein polymeres Material durchdringt und eine Düsenplatte, die eine gestufte Öffnung aufweist

Procédé de photo-ablation d'au moins une ouverture étagée traversant un matériau polymère et plaque présentant des ouvertures étagées ayant la fonction de buse

**(84)** Designated Contracting States:
**DE FR GB IT**

**(30)** Priority: **21.02.1991 US 658726**

**(43)** Date of publication of application:
**26.08.1992 Bulletin 1992/35**

**(73)** Proprietor: **Hewlett-Packard Company**
**Palo Alto, California 94304 (US)**

**(72)** Inventors:
• **Lam, Si-Ty**
**Pleasanton, California 94566 (US)**

• **Hanson, Eric G.**
**Burlingame, California 94101 (US)**

**(74)** Representative: **Liesegang, Roland, Dr.-Ing. et al**
**FORRESTER & BOEHMERT**
**Franz-Joseph-Strasse 38**
**80801 München (DE)**

**(56)** References cited:
**EP-A- 0 309 146**        **EP-A- 0 367 541**
**EP-A- 0 440 263**        **DE-A- 3 805 279**

• **PATENT ABSTRACTS OF JAPAN vol. 11, no. 90 (M-573)(2537) 20 March 1987 & JP-A-61 242 851 (HITACHI KOKI) 29 October 1986**

## Description

### Field of the Invention:

The present invention generally relates to a process of processes for fabricating inkjet nozzles in nozzle plates for the printheads of inkjet printers.

### State of the Art:

It is known to provide printheads for inkjet printers wherein the printheads each include a substrate, an intermediate barrier layer, and a nozzle plate. A plurality of nozzle orifices are formed in the orifice plate. Accordingly, a complete inkjet printhead includes an array of circular nozzle orifices, each of which is paired with a vaporization cavity. Also, a complete inkjet printhead includes means that connect a number of vaporisation cavities to an ink supply reservoir.

In conventional practice, a heater resistor is positioned within each vaporization cavity of a printhead. Typically, the resistors are of the thin film type. The heater resistors are connected in an electrical network for selective activation. More particularly, when a particular heater resistor receives a pulse, it rapidly converts the electrical energy to heat which, in turn, causes any ink immediately adjacent to the heater resistor to form an ink vapor bubble that ejects a droplet of ink from the orifice in the nozzle plate above the energized heater resistor. Thus, by appropriate selection of the sequence for energizing the heater resistors in an inkjet printhead, ejected ink droplets can be caused to form patterns on a paper sheet or other suitable recording medium.

In practice, the print quality provided by inkjet printers depends upon the physical characteristics of the nozzles in a printhead. For example, the geometry of the orifice nozzles in a printhead affects the size, trajectory, and speed of ink drop ejection. In addition, the geometry of orifice nozzles in a printhead can affect the flow of ink supplied to vaporization chambers and, in some instances, can affect the manner in which ink is ejected from adjacent nozzles.

In conventional practice, nozzle plates for inkjet printheads are formed of nickel and are fabricated by lithographic electroforming processes. One example of a suitable lithographic electroforming process is described in United States Patent No. 4,773,971. In such processes, the orifices in a nozzle plate are formed by overplating nickel onto a dielectric pattern. Although such processes for forming nozzle plates for inkjet printheads have numerous benefits, they also have several shortcomings. One shortcoming is that the processes require delicate balancing of parameters such as stress and plating thicknesses and overplating ratios. Another shortcoming is that such electroforming processes inherently limit design choices for nozzle shapes and sizes.

EP-A-0 367 541 discloses a process of producing at least one inkjet nozzle in a nozzle plate for an inkjet printer by photo-ablating at least one opening extending through the nozzle plate which is made from a polymer material having an ablation threshold, the process comprising: employing an excimer laser to provide a constrainable laser beam to a first predetermined object area; exposing the polymer material to the beam of laser energy output at its constrained setting to ablate the polymer material for forming a hole which extends through the polymer material.

It is the problem of the invention to provide a process which can be used for forming stepped openings through polymer material. This problem is accomplished by claim 1.

The process of the invention is used for fabricating inkjet nozzles in nozzle plates for inkjet printer print heads. The photo-ablated nozzle plate is formed of polymer material. The polymer material preferably is a plastic such as teflon, polyimide, polymethylmethacrylate, polyethyleneterephthalate or mixtures and combinations thereof.

The first and second steps can be implemented, for instance, by exposing a laser beam through apertures in respective masks onto the polymer material, the first step being carried out with a mask having a first size aperture and the second step being carried out with a mask having a second size aperture. Alternatively, the first and second steps can be carried out by exposing the laser beam through a projection mask, one of the first and second steps being carried out with an image of the projection mask in-focus on the polymer material and the other of the first and second steps being carried out with the image of the projection mask out-of-focus on the polymer material. Alternately, different laser power densities can be used during the first and second steps. In the preferred embodiment, the first and second steps allow a stepped opening to be formed which includes a first larger opening extending part way through the polymer material and a second smaller opening extending completely through the polymer material, the larger opening preferably being coincident with the smaller opening.

### BRIEF DESCRIPTION OF THE DRAWINGS

The present invention can be further understood by reference to the following description and attached drawings which illustrate the preferred embodiments. In the drawings:

Figure 1 shows a first step of a process of forming an inkjet nozzle according to the present invention;

Figure 2 shows a step according to the invention for performance after the step shown in Figure 1;

Figure 3 shows a first step of a process according to another embodiment of the invention;

Figure 4 shows a step for performance after the step shown in Figure 3;

Figure 5 shows a first step of the process according to a further embodiment of the invention;

Figure 6 shows a step for performance after the step shown in Figure 5;

Figure 7 shows a first step of a process according to a still further embodiment of the invention; and

Figure 8 shows a step for performance after the step shown in Figure 7.

DETAILED DESCRIPTION OF THE PREFERRED EMBODIMENTS

In the following, there will be described a process of photo-ablating at least one stepped opening through a polymer material for making an inkjet nozzle of an inkjet printhead. Generally speaking, the process comprises subjecting polymer material to two separate exposures with an Excimer laser beam which is projected first through at least one aperture of one size in a first mask and then through at least one aperture of a different size in a second mask. It should be understood that the inkjet nozzle can be provided on an inkjet printhead having generally the same appearance as conventional inkjet printheads but which is different in that it is formed of a polymer material that is photo-ablated or photo-etched. The polymer material preferably is a plastic such as teflon, polyimide, polymethylmethacrylate, polyethyleneterephthalate or mixtures thereof.

In practice, the preferred means for photo-ablating or photo-etching a polymer nozzle plate is a high-energy photon laser such as the excimer laser. The excimer laser can be, for example, of the $F_2$, ArF, KrCl, KrF, or XeCl type. The excimer laser is useful for photo-ablation since this type of laser can provide energy sufficient to break the carbon-carbon chemical bond of polymer material.

Photo-ablation processes have numerous advantages as compared to conventional lithographic electroforming processes for forming nozzle plates for inkjet printheads. For example, photo-ablation processes generally are less expensive and simpler than conventional lithographic electroforming processes. In addition, by using photoablation processes, polymer nozzle plates can be fabricated in substantially larger sizes (i.e., having greater surface areas) and with nozzle geometries (i.e., shapes) that are not practical with conventional electroforming processes. In particular, unique nozzle shapes can be produced by making multiple exposures with a laser beam and/or the nozzle plate being reoriented between each exposure. Also, precise nozzle geometries can be formed without process controls as strict as are required for electroforming processes.

At this juncture, it should be appreciated that the below-described process for making an opening through a polymer material by photo-ablating the polymer material allows openings of complex geometry to be formed in a simple manner. In practice, the openings can be formed with an excimer laser which typically forms an opening having a sidewall which is tapered at a small angle with respect to a direction parallel to the laser beam.

As the first step in the process, a polymer material is photo-ablated by exposing the polymer material to a first beam of laser energy to ablate the polymer material so as to form a first hole extending into the polymer material. Then, polymer material is exposed to a second beam of laser energy to ablate the polymer material so as to form a second hole extending into the polymer material, the second hole being in fluid communication with the first hole and forming a stepped opening through the polymer material. As is described below in detail, these two steps can be performed in a number of ways.

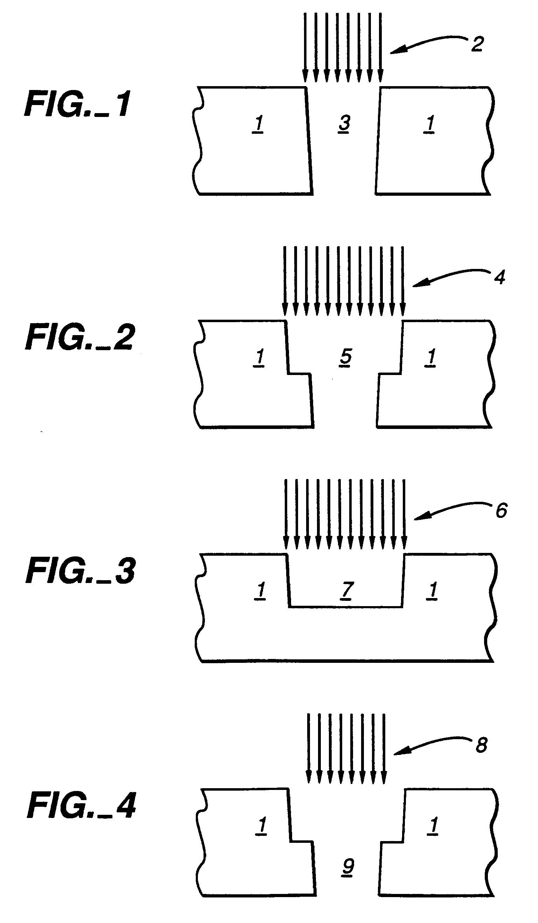

As shown in Figure 1, for example, polymer material 1 can be exposed in the first step to a first smaller beam 2 of laser energy to ablate the polymer material so as to form a through hole 3 extending completely through the polymer material. The first mask would have smaller size apertures than the second mask.

As a second step, shown in Figure 2, the polymer material 1 can be exposed to a second wider beam 4 of laser energy to ablate the polymer material so as to form a blind hole 5 extending part way through the polymer material. It should be observed that the blind hole 5 is larger in size in a direction perpendicular to the second beam 4 than the through hole 3, thereby forming a stepped opening through the polymer material 1. In this case, the first step can be accomplished with first and second masks, with the aperture in the first mask being smaller than the apertures in the second mask.

According to one alternative, the polymer material 1 can be exposed to the wider beam of laser energy first. In this case, a larger beam 6 of laser energy is used to ablate part way through the polymer material 1 to a first depth to form a blind hole 7, as shown in Figure 3. Then, the polymer material 1 can be exposed to a smaller beam 8 of laser energy which produces a through hole 9 extending completely through the polymer material, as shown in Figure 4. In practice, the first and second holes are circular and coincident with each other, the holes being formed by exposing the same side of the polymer material to the two beams of laser energy.

The ablation depth is controlled by the number of laser pulses transmitted through each mask. Using optical subsystems such as beam homogenizers to achieve constant optical power density across the laser beam, the depth of ablation can be uniform to less than ten percent (10%) of the nominal depth. As shown by Figures 1-4, the blind hole 5, 7 can be ablated either first or second. If the blind hole is ablated first, higher manufacturing throughput will be achieved because the smaller size through hole will not have to penetrate the entire thickness of the polymer material. If the through hole is ablated first, some increased precision in the exit orifice diameter may be achieved. These two holes can be ablated with different types of masks. For instance, a proximity mask or a projection mask (which uses a lens to image the mask onto the polymer material) can be used.

According to a second embodiment, both steps of the process can be performed with one mask such as a projection mask. In particular, one of the first and second steps can be carried out with an image of the projection mask in-focus on the polymer material and the other of the first and second steps can be carried out with the image of the projection mask out-of-focus on the polymer material.

A process according to the second embodiment produces a smooth taper. Furthermore, the smaller through hole is ablated with the image of the mask in-focus on the polymer material while the larger blind hole is ablated with the image of the mask out-of-focus. With the image of the mask out-of-focus, the optical power density falls off gradually in the blurred zone at the edges of each imaged area, rather than the abrupt fall-off produced when the image is in-focus. The ablated depth varies with the optical power density, so the out-of-focus image produces an ablated hole with a depth that falls off gradually over the width of the pattern thus formed at its perimeter rather than having an abrupt edge. The lateral width of the perimeter zone of the larger blind hole varies with the extent to which the image is out-of-focus.

The out-of-focus image can be produced in several ways. For instance, a distance between the polymer material and the mask can be changed or an additional optical element can be introduced in the path of the laser beam. For instance, the mask and the lens can be fixed in position and the polymer material moved closer to the lens than the image plane, or the polymer material can be moved further away from the lens. Alternatively, the additional optical element can be placed between the lens and the polymer material. For instance, the additional optical element can comprise a flat piece of silica or other material transmitting at the excimer laser wavelength.

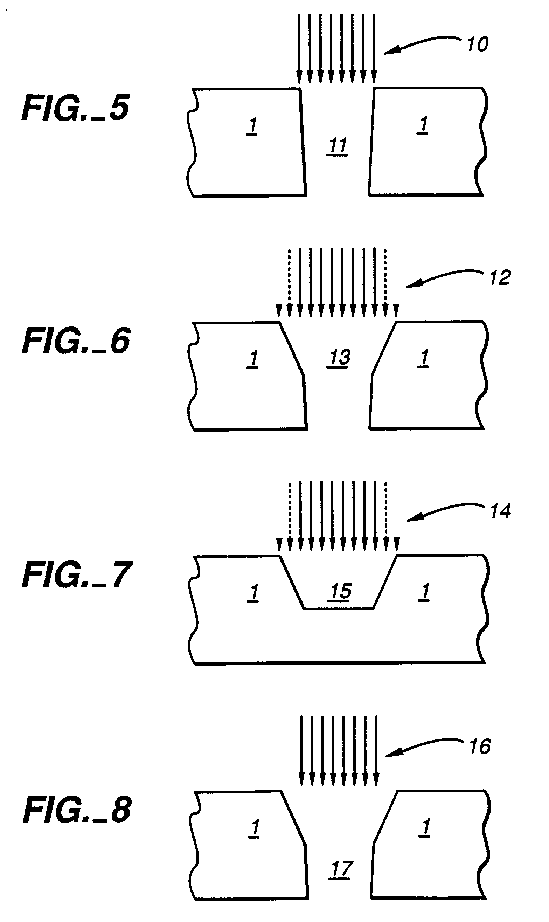

In the case where the additional optical element is introduced into the laser beam, the image is shifted vertically by a distance = $t(1-[1\backslash n])$ , where t is the thickness of the element and n is its refractive index. Both methods of producing an out-of-focus image require the use of a telocentric lens so that the magnification of the image does not change as it goes out of focus. In producing the smooth-taper orifices, the larger diameter out-of-focus blind hole can be ablated either first or second as shown in Figures 5-8. The advantages and disadvantages of the two ablation sequences are the same as for the stepped opening described earlier.

As shown in Figure 5, an in-focus beam of laser energy 10 can ablate through the polymer material 1 so as to provide a through hole 11. Then, the laser beam can be manipulated so as to form an out-of-focus beam of laser energy 12 as shown in Figure 6. The out-of-focus beam 12 provides a recess or blind hole 13 which is larger in size than the through hole 11 and the blind hole 13 has a sidewall with a taper angle which is larger than a corresponding taper angle of a sidewall of the through hole 11 formed by the in-focus beam 10.

Alternatively, an out-of-focus laser beam 14 can ablate the polymer material 1 to form a blind hole 15, as shown in Figure 7, after which an in-focus beam 16 can ablate the polymer material 1 to form a through hole 17. The combination of the blind hole 15 and the through hole 17 forms a stepped opening in the polymer material 1.

According to a third embodiment, a tapered orifice having a smooth taper can be provided. In particular, the laser power density of a laser can be increased from a lower power density which is above the ablation threshold and produces a blind hole having larger taper angle, to a higher power density producing a through hole having a smaller taper angle. The net result is a stepped opening having a large taper on the inlet side of the opening and a small taper on the outlet side of the opening. In this case, the first and second steps can be combined in a single processing sequence with the laser power density during the first step being different than the laser power density during the second step. For instance, the laser power density can be greater during the first step and the first depth can extend completely through the polymer material to form a through hole. It is preferred, however, that the laser power density is lower during the first step and is increased to a higher laser power density during the second step.

When fabricating inkjet nozzles for inkjet printheads, the stepped openings are circular and are formed by a respective through hole which is coincident with a respective blind hole having a larger diameter than that of the through hole. Such stepped openings will include at least one step or at least one change in taper angle along a sidewall forming the stepped opening.

According to a further embodiment, the first step forms a plurality of first holes and the second step forms a plurality of second holes in fluid communication with the first holes which together with the first holes form a plurality of stepped openings having dimensions and arranged in a pattern suitable for use as inkjet nozzle openings of a nozzle plate of an inkjet printhead for an inkjet printer. The nozzle plate is assembled on a thin film substrate such that a respective vaporization cavity is provided in fluid communication with each of the nozzle openings and each cavity is selectively heatable by means of a thin-film resistor such that ejected ink droplets from the nozzle openings form patterns on a suitable recording medium.

The above-described process is advantageous in that it produces openings which have an overall taper larger than the 3-5° half-angles which are typically produced by excimer laser ablation in substances such as polyimide. Such tapers can be important to avoid trajectory instabilities and other problems caused by bubble trapping in the drop ejection chamber (which lies at the entrance to the orifice). These orifices also contain a low-taper exit section which can improve directionality. These orifices have in their low-taper exit sections the smooth wall characteristic of ablation at power densities well above the ablation threshold. This is an important advantage over ablation at lower power densities which does not produce tapered orifices, but has much rougher walls which are less dimensionally accurate and less suitable for the critical exit section.

The foregoing has described the principles, preferred embodiments and modes of operation of the present invention. However, the invention should not be construed as being limited to the particular embodiments discussed. Thus, the above-described embodiments should be regarded as illustrative rather than restrictive, and it should be appreciated that variations may be made in those embodiments by workers skilled in the art without departing from the scope of present invention as defined by the following claims.

## Claims

1. A process of producing at least one inkjet nozzle in a nozzle plate for an inkjet printer by photo-ablating at least one stepped opening (3,5; 7,9; 11,13; 15,17) extending through the nozzle plate (1) which is made from a polymer material (1) having an ablation threshold, the process comprising:
   employing an excimer laser to provide a first constrainable laser beam to a first predetermined object area and a second constrainable laser beam to a second predetermined object area;
   as a first step, exposing the polymer material (1) to the first beam (2, 4, 10, 14) of laser energy output at its constrained setting to ablate the polymer material (1) for forming a first hole (3, 7, 11, 15) which extends into the polymer material (1); and
   as a second step, exposing the polymer material (1) to the second beam (4, 8, 12, 16) of laser energy output at its constrained setting to ablate the polymer material (1) for forming a second hole (5, 9, 13, 17) which extends into the polymer material (1), the second hole (5, 9, 13, 17) being in fluid communication with the first hole (3, 7, 11, 15) and together with the first hole (3, 7, 11, 15) to form a stepped opening (3,5; 7,9; 11,13; 15,17) that extends through the polymer material (1);
   the laser energy power densities of both beams being significantly above the ablation threshold and either the power density of the two beams or the widths of the two beams being different such that the two holes are made to have different sizes.

2. The process of claim 1, wherein the first and second holes (3,5; 7,9; 11,13; 15,17) are conical and coaxial with each other.

3. The process of claim 1 or 2, wherein the step of exposing comprises:
   exposing the first beam through a first mask having a first size aperture;
   exposing the second beam through a second mask having a second size aperture; and
   the size of the first aperture being different from the size of the second aperture.

4. The process of claim 3, wherein the first aperture is smaller than the second aperture and the first hole (3) extends completely through the polymer material (1).

5. The process of one of claims 1 to 4, wherein the step of exposing is carried out using a beam homogenizer which achieves constant optical power density across at least one of the first and second laser beams (2, 4, 6, 8).

6. The process of one of claims 3 to 5, wherein at least one of the masks is a proximity mask.

7. The process of one of claims 3 to 5, wherein at least one of the masks is a projection mask which includes a lens to image the mask onto the polymer material (1).

8. The process of claim 1, wherein the step of exposing is carried out by changing laser power density such that the laser power density applied to a first beam is different than the laser power density applied to a second beam.

9. The process of claim 8, wherein the laser power density applied to a first beam is lower than the laser power density applied to a second beam and the laser power density is increased to a higher laser power density when applied to the second beam, the first beam producing a larger taper angle between a direction parallel to the first beam (14) and a sidewall of the first hole (15) than a taper angle formed between a direction parallel to the second beam (16) and a sidewall of the second hole (17).

10. The process of one of claims 1 to 9, further comprising a step of forming a nozzle plate (1) of an inkjet printer by simultaneously forming a plurality of first holes (3, 7, 11, 15) during the first step and simultaneously forming a plurality of second holes (5, 9, 13, 17) during the second step, the first holes (3, 7, 11, 15) being in fluid communication with the second holes (5, 9, 13, 17) and together with the second holes (5, 9, 13, 17) forming a plurality of stepped openings (3,5; 7,9; 11,13; 15,17) having dimensions suitable for use as inkjet nozzle openings and being provided in a pattern suitable for use as a nozzle plate (1) of an inkjet printhead for an inkjet printer.

## Patentansprüche

1. Verfahren zum Herstellen von Wenigstens einer Tintenstrahldüse in einer Düsenplatte für einen Tintenstrahldrucker durch Photoablation bei wenigstens einer gestuften Öffnung (3,5; 7,9; 11,13; 15,17), welche sich durch die Düsenplatte (1) erstreckt, die aus einem Polymerwerkstoff (1) mit einem Ablations-Schwellwert hergestellt ist, mit folgenden Verfahrensschritten:

Verwenden eines Excimerlasers, um einen ersten beschränkbaren Laserstrahl zu einem ersten vorgegebenen Objektbereich und einem zweiten beschränkbaren Laserstrahl zu einem zweiten vorgegebenen Objektbereich vorzusehen;

einem ersten Schritt, bei dem der Polymerwerkstoff (1) dem ersten Strahl (2, 4, 10, 14) mit einer Laserenergie ausgesetzt wird, welche bei ihrer beschränkten Einstellung ausgegeben wird, um den Polymerwerkstoff (1) abzutragen, um ein erstes Loch (3, 7, 11, 15) zu bilden, welches sich in dem Polymerwerkstoff (1) hinein erstreckt; und

einem zweiten Schritt, bei dem der Polymerwerkstoff (1) dem zweiten Strahl (4, 8, 12, 16) mit einer Laserenergie ausgesetzt wird, welche bei ihrer beschränkten Einstellung ausgegeben wird, um den Polymerwerkstoff (1) abzutragen, um ein zweites Loch (5, 9, 13, 17) auszubilden, welches sich in dem Polymerwerkstoff (1) hinein erstreckt, wobei das zweite Loch (5, 9, 13, 17) in Fluidverbindung mit dem ersten Loch (3, 7, 11, 15) steht und zusammen mit dem ersten Loch (3, 7, 11, 15) eine gestufte Öffnung (3, 5; 7, 9; 11, 13; 15, 17) bildet, welche sich durch den Polymerwerkstoff (1) erstreckt,

wobei die Laserenergie-Leistungsdichten beider Strahlen erheblich über dem Ablations-Schwellwert liegen und entweder die Leistungsdichten der beiden Strahlen oder die Breiten der beiden Strahlen unterschiedlich sind, so daß die beiden Löcher mit unterschiedlichen Größen hergestellt werden.

2. Verfahren nach Anspruch 1, bei dem das erste und das zweite Loch (3, 5; 7, 9; 11, 13; 15, 17) konisch und koaxial zueinander sind.

3. Verfahren nach Anspruch 1 oder 2, bei dem der Schritt des Aussetzens folgende Schritte umfaßt:
den ersten Strahl durch eine erste Maske mit einer Öffnung einer ersten Größe aussetzen,
den zweiten Strahl durch eine zweite Maske mit einer Öffnung einer zweiten Größe aussetzen, wobei
die Größe der ersten Öffnung sich von Größe der zweiten Öffnung unterscheidet.

4. Verfahren nach Anspruch 3, bei dem die erste Öffnung kleiner als die zweite Öffnung ist und sich das erste Loch (3) vollständig durch den Polymerwerkstoff (1) hindurch erstreckt.

5. Verfahren nach einem der Ansprüche 1 bis 4, bei dem der Schritt des Aussetzens unter Verwendung eines Strahlen-Homogenisierapparates durchgeführt wird, welcher eine konstante optische Leistungsdichte über wenigstens einem, dem ersten oder dem zweiten, Laserstrahl (2, 4; 6, 8) erzielt.

6. Verfahren nach einem der Ansprüche 3 bis 5, bei dem wenigstens eine der Masken eine berührungslose Maske ist.

7. Verfahren nach einem der Ansprüche 3 bis 5, bei dem wenigstens eine der Masken eine Projektionsmaske ist, welche eine Linse zum Abbilden der Maske auf dem Polymerwerkstoff (1) aufweist.

8. Verfahren nach Anspruch 1, bei dem der Schritt des Aussetzens durch Ändern der Leistungsdichte des Lasers ausgeführt wird, so daß die Leistungsdichte des Lasers, welche bei einem ersten Strahl aufgewendet wird, sich von der Leistungsdichte des Lasers, welche bei einem zweiten Strahl aufgewendet wird, unterscheidet.

9. Verfahren nach Anspruch 8, bei dem die Leistungsdichte des Lasers, welche bei einem ersten Strahl aufgewendet wird, niedriger ist als die Leistungsdichte des Lasers, welche bei einem zweiten Strahl auf eine aufgewendet wird, und die Leistungsdichte des Lasers für den zweiten Strahl auf eine höhere Laser-Leistungsdichte erhöht wird, und bei dem der erste Strahl einen Fasenwinkel zwischen einer zu dem ersten Strahl (14) parallelen Richtung und einer Seitenwand eines ersten Lochs (15) erzeugt, der größer ist als ein Fasenwinkel, welcher zwischen einer zu dem zweiten Strahl (16) parallelen Richtung und einer Seitenwand des zweiten Loches (17) gebildet wird.

10. Verfahren nach einem der Ansprüche 1 bis 9, bei dem weiterhin eine Düsenplatte (1) eines Tintenstrahldruckers gebildet wird, und bei dem gleichzeitig mehrere erste Löcher (3, 7, 11, 15) während des ersten Schrittes und gleichzeitig mehrere zweite Löcher (5, 9, 13, 17) während des zweiten Schrittes gebildet werden, wobei die ersten Löcher (3, 7, 11, 15) in Fluidverbindungen mit den zweiten Löchern (5, 9, 13, 17) stehen und zusammen mit den zweiten Löchern (5, 9, 13, 17) mehrere gestufte Öffnungen (3, 5; 7, 9; 11, 13; 15, 17), deren Abmessungen zur Verwendung als eine Tintenstrahl-Düsenöffnung geeignet sind und die in einem Muster vorgesehen werden, welches sich zur Verwendung als eine Düsenplatte (1) eines Tintenstrahldruckkopfs für einen Tintenstrahldrucker eignet.

**Revendications**

1. Un procédé de production d'au moins une buse à jet d'encre, dans une plaque à buses destinée à une imprimante à jets d'encre, par photo-ablation d'au moins une ouverture étagée (3, 5; 7, 9; 11, 13; 15, 17) qui traverse ladite plaque (1) à buses qui est en une matière polymère (1) à seuil d'ablation, le procédé comprenant les étapes consistant à :

employer un laser à dimère excité pour envoyer un premier faisceau laser susceptible d'être contraint vers une première zone prédéterminée d'objet et un deuxième faisceau laser susceptible d'être contraint vers une deuxième zone prédéterminée d'objet ;

exposer, en tant que première étape, la matière polymère (1) au premier faisceau (2, 4, 10, 14) d'énergie laser produit à son réglage contraint, en vue d'effectuer une ablation de la matière polymère (1) de manière à ménager un premier orifice (3, 7, 11, 15) qui s'étend dans la matière polymère (1) ; et

exposer, en tant que deuxième étape, la matière polymère (1) au deuxième faisceau (4, 8, 12, 16) d'énergie laser produit à son réglage contraint, en vue d'effectuer une ablation de la matière polymère (1) de manière à ménager un deuxième orifice (5, 9, 13, 17) qui s'étend dans la matière polymère (1), le deuxième orifice (5, 9, 13, 17) étant en communication de fluide avec le premier orifice (3, 7, 11, 15), et en vue de former en coopération avec le premier orifice (3, 7, 11, 15) une ouverture étagée,(3, 5 ; 7, 9 ; 11, 13 ; 15, 17) qui traverse la matière polymère (1) ;

les densités de puissances d'énergie laser des deux faisceaux étant supérieures de façon significative au seuil d'ablation et les deux faisceaux différant, soit quant à leurs densités de puissance, soit quant à leurs largeurs de façon que les dimensions des deux orifices soient différentes.

2. Le procédé selon la revendication 1, dans lequel le premier et le deuxième orifices (3, 5 ; 7, 9 ; 11, 13 ; 15, 17) sont coniques et coaxiaux l'un avec l'autre.

3. Le procédé selon la revendication 1 ou 2, dans lequel l'étape d'exposition comprend les étapes consistant à :

exposer le premier faisceau à travers un premier masque à ouverture de premières dimensions ;

exposer le deuxième faisceau à travers un deuxième masque à ouverture de deuxièmes dimensions ; et

les dimensions de la première ouverture étant différentes des dimensions de la deuxième ouverture.

4. Le procédé selon la revendication 3, dans lequel la première ouverture est plus petite que la deuxième ouverture et le premier orifice (3) traverse complètement la matière polymère (1).

5. Le procédé selon l'une des revendications 1 à 4, dans lequel l'étape d'exposition est effectuée en utilisant un homogénéisateur de faisceau qui réalise une densité constante de puissance optique transversalement au moins soit pour le premier, soit pour le deuxième faisceaux laser (2, 4, 6, 8).

6. Le procédé selon l'une des revendications 3 à 5, dans lequel au moins l'un des masques est un masque de proximité.

7. Le procédé selon l'une des revendications 3 à 5, dans lequel au moins l'un des masques est un masque de projection qui inclut une lentille destinée à former l'image du masque sur la matière polymère (1).

8. Le procédé selon la revendication 1, dans lequel l'étape d'exposition est effectuée en modifiant la densité de puissance laser d'une manière telle que la densité de puissance laser appliquée à un premier faisceau est différente de la densité de puissance laser appliquée à un deuxième faisceau.

9. Le procédé selon la revendication 8, dans lequel la densité de puissance laser appliquée à un premier faisceau est inférieure à la densité de puissance laser appliquée à un deuxième faisceau et la densité de puissance laser est accrue à une densité de puissance laser supérieure lorsqu'elle est appliquée au deuxième faisceau, le premier faisceau produisant, entre une direction parallèle au premier faisceau (14) et une paroi latérale du premier orifice (15), un angle d'effilement plus grand qu'un angle d'effilement formé entre une direction parallèle au deuxième faisceau (16) et une paroi latérale du deuxième orifice (17).

10. Le procédé selon l'une des revendications 1 à 9, comprenant en outre une étape consistant à former une plaque (1) à buses d'une imprimante à jets d'encre en formant simultanément pendant la première étape une série de premiers orifices (3, 7, 11, 15) et en formant simultanément pendant la deuxième étape une série de deuxièmes orifices (5, 9, 13, 17), les premiers orifices (3, 7, 11, 15) étant en communication de fluide avec les deuxièmes orifices (5, 9, 13, 17) et formant en coopération avec les deuxièmes orifices (5, 9, 13, 17) une série d'ouvertures étagées (3, 5 ; 7, 9 ; 11, 13 ; 15, 17) dont les dimensions sont appropriées à une utilisation comme ouvertures de buses de jets d'encre et qui sont agencées selon une configuration adaptée à une utilisation comme plaque (1) à buses d'une tête d'impression à jets d'encre pour une imprimante à jets d'encre.

FIG._1

*1*  *3*  *1*  *2*

FIG._2

*1*  *5*  *1*  *4*

FIG._3

*1*  *7*  *1*  *6*

FIG._4

*1*  *1*  *8*  *9*

FIG._5

FIG._6

FIG._7

FIG._8